# EUROPEAN PATENT APPLICATION

(11) **EP 2 869 192 A1**
(43) Date of publication of application: **06.05.2015**
(21) Application number: 14191305.3
(22) Date of filing: 31.10.2014
(51) Int. Cl.: G06F 9/445

(54) **Integrated management of centrally modified software systems**

(30) Priority: 01.11.2013 US 201314069969; 07.11.2013 US 201314074335
(71) Applicant: SAP SE, 69190 Walldorf (DE)
(72) Inventor: Pohlmann, Michael, 69190 Walldorf (DE)
(74) Representative: Richardt Patentanwälte PartG mbB

(57) **Abstract**

The present disclosure relates to a computer implemented method for providing a first application for at least one first computer system, wherein the first application comprises a set of data processing workflows, the method comprises a) determining a pattern of a data processing workflow of the set of data processing workflows, wherein the pattern indicates one or more workflow processes of the data processing workflow; b) determining a system configuration of the first computer system required for running the first application on the first computer system; c)providing a second computer system in accordance with the system configuration; d) creating a structure on a storage subsystem of the second computer sys-tem within which to store the first application and copying the first application to the created structure; e)for each workflow process of the one or more workflow processes configuring the first application to enable the workflow process; f)instantiating the configured first application on the second computer sys-tem and starting the first application once instantiated; g)unlinking the first application from an operating system of the second computer system; h)packaging the configured and unlinked first application to generate a first appliance; i) configuring the first appliance to be automatically deployed on the first computer system.

## Description

### BACKGROUND

Computing systems today typically utilize large, complex software systems to manage many parts of their operations. Some such software systems include Enterprise Resource Planning (ERP), Customer Relationship Management (CRM), Human Capital/Resource Management (HCM/HRM), and the like. An example developer and supplier of such systems is SAP SE of Walldorf, Germany. Common amongst these systems is their large scale and high flexibility to many possible different scenarios for supporting workflow processes. However, with their large scale and high flexibility comes not only complexity, but also time expense and risk for both deployment and maintenance. The time expense and risk (e.g. of failures) are also compounded by the amount of time needed to deploy, configure, and customize such software systems.

### SUMMARY

It is an objective of embodiments of the invention to provide for a method for providing a first application for at least one first computer system, and a compute system. Said objective is solved by the subject matter of the independent claims. Advantageous embodiments are described in the dependent claims.

In one aspect, the invention relates to a computer implemented method for providing a first application for at least one first computer system, wherein the first application comprises a set of data processing workflows. The method comprises:
a) determining a pattern of a data processing workflow of the set of data processing workflows, wherein the pattern indicates one or more workflow processes of the data processing workflow;
b) determining a system configuration of the first computer system required for running the first application on the first computer system;
c) providing a second computer system in accordance with the system configuration;
d) creating a structure on a storage subsystem of the second computer system within which to store the first application and copying the first application to the created structure;
e) for each workflow process of the one or more workflow processes configuring the first application to enable the workflow process;
f) instantiating the configured first application on the second computer system and starting the first application once instantiated;
g) unlinking the first application from an operating system of the second computer system;
h) packaging the configured and unlinked first application to generate a first appliance;
i) configuring the first appliance to be automatically deployed on the first computer system.

The above features may have the advantage of saving resources that would otherwise be required when configuring the first application on every target system of the at least one first computer system. This may also save time that may be required for performing multiple configurations using different methods on multiple target systems of the at least one first computer system.

Another advantage may be that the present method may provide a single centralized configuration approach that may be less error prone compared to multiple local configurations that may be performed using different methods by multiple target systems of the at least one first computer system.

According to one embodiment, the method further comprises before step e) (of configuring the first application) instantiating the first application on the second computer system and starting the first application once instantiated; unlinking the first application from the operating system; packaging the non-configured and unlinked first application to generate a second appliance; providing the first and second appliances.

This embodiment may have the advantage of providing both the first application and the configured first application (to perform a data processing workflow), such that in case of an eventual unsuccessful installation or running of the configured first application the user may always go back and use the first application that corresponds to the configured first application and performs the configuration again. This may save time and resources that would otherwise be required for iterations between the first and second computer systems in order to fix the eventual unsuccessful installation.

According to one embodiment, the system configuration comprises a configuration of the first computer system at a predefined execution stage of the data processing workflow. This may provide an accurate definition of the system configuration as the system configuration may be execution time dependent. This may further save resources that would otherwise be required for fixing an issue that may relate to the system configuration and/or resources that may be required for performing multiple attempts for running the first application on the second computer system.

According to one embodiment, the execution stage comprises one of: initialization of the data processing workflow; finalization of the data processing workflow. The initialization of the data processing workflow may comprise a stage in which libraries are linked and/or connections to eventual external devices are setup etc. the finalization of the data processing workflow may refer to the ending of execution of the data processing workflow.

The advantage of using the initialization of the data processing workflow may reside in the fact that it may save resources that would otherwise be required to estimate the system configuration after running the data processing workflow.

According to one embodiment, the at least one first computer system comprises multiple computer systems having the same or different operating systems, wherein in case the multiple computer systems have different operating systems repeating steps b) to i) for each operating system of the different operating systems. This may provide an accurate configuration for the first appliance.

In another example, in case the multiple computer systems have different operating systems only step i) may be repeated such that the configuration of the first appliance may be adapted for each of the different operating systems.

This may further save resources that would otherwise be required for performing the whole configuration method as described above for every different operating system.

According to one embodiment, configuring the first appliance to be automatically deployed on the first computer system comprises providing data identifying at least one minimum computing device requirement for a third computer system (of the at least one first computer system) such that the first appliance can be instantiated on the third computer system.

This may have the advantage of installing the first appliance on target systems of the at least one first computer system without undue burden. This may also save resources that would otherwise be required for a manual installation of the first appliance.

According to one embodiment, providing the second computer system comprises: determining components of an operating system required for running the first application on the first computer system; generating a light weight version of the operating system using the determined components; installing the light weight version of the operating system on the second computer system.

Performing the method as described above with a minimal configuration may save resources and time. This may also eventual debugging process of the first application when being configured.

According to one embodiment, the first computer system has a first computer performance, wherein providing the second computer system in accordance with the system configuration comprises providing the second computer system with a second computer performance different from the first computer performance.

For example, a performance of the first and second performance may comprise storage resources, CPU resources (e.g. number of CPU) etc. For example, the second performance may be better than the first performance in that the second computer system may have e.g. more CPU than the first computer system etc. This may be one of the advantages of preparing the first appliance on a separate system from the target systems of the at least one first computer system since the target systems may usually be constrained to run other applications in parallel such that they may provide only small fraction of their resources for the first application.

In another example, the first performance may be better than the second performance in that the first computer system may have e.g. more CPU or storages than the second computer system etc. This may allow using less resources for performing the above method compared to the case where the second performance may be better than the first performance. In this case, the second computer system may comprise a mobile telecommunication device such as a smartphone which is known as having less resources than other computing devices.

According to one embodiment, the method further comprises generating a metadata file identifying the contents of the first appliance, defining a structure within which individual items of the contents of the first appliance are stored, and data identifying the operating system of the second computer system and user configuration data defining user accounts and first application access privileges thereof.

According to one embodiment, the method further comprises: receiving a command to attach the first appliance to a third computer system, wherein performing the attach includes reading data from the metadata file and verifying the third computer system is compatible with the first appliance; when the third computer system is compatible, connecting to a storage subsystem of the third computer system, creating a structure on the storage subsystem within which to store items of the first appliance, the structure created according to the metadata file defining the structure within which individual items of the contents of the first appliance are to be stored, and copying individual items of the first appliance to respective data storage locations within the created structure; creating users accounts and setting user access privileges as defined in the metadata file; and starting the first appliance on the third computer system, the appliance being an identical copy of the first application on the second computer system at the time the appliance was created through performance of the unlinking.

This may provide an efficient method for automatically installing the first appliance on target systems of the at least one first computer system.

According to one embodiment, the data processing workflow comprises the steps of creating users accounts and setting user access privileges.

According to one embodiment, unlinking comprises removing file paths referring to the operating system of the second computer system.

According to one embodiment, the second computer device comprises a virtual machine. The virtual machine has the advantage of using less resources compared to other machines.

In another aspect, the invention relates to a computer program product comprising computer executable instructions to perform the method steps of the method of any one of the preceding claims.

In a further aspect the invention relates to a computer system computer system for providing a first application for at least one first computer system, wherein the first application comprises a set of data processing workflows. The computer system is configured for:
a) determining a pattern of a data processing workflow of the set of data processing workflows, wherein the pattern indicates one or more workflow processes of the data processing workflow;
b) determining a system configuration of the first computer system required for running the first application on the first computer system;
c) providing a second computer system in accordance with the system configuration;
d) creating a structure on a storage subsystem of the second computer system within which to store the first application and copying the first application to the created structure;
e) for each workflow process of the one or more workflow processes configuring the first application to enable the workflow process;
f) instantiating the configured first application on the second computer system and starting the first application once instantiated;
g) unlinking the first application from an operating system of the second computer system;
h) packaging the configured and unlinked first application to generate a first appliance;
i) configuring the first appliance to be automatically deployed on the first computer system.

In some embodiments, a method comprises installing a software system on a first computing device, the software system including at least executable files and configuration data; receiving and storing modifications to the software system in the form of at least additions to and modifications of the configuration data and additions to and modifications of software system content; and receiving a command to detach the software system from the first computing device, wherein performing the detach includes: copying the software system, including the executable files, configuration data, software system content, and other data into a virtual appliance data structure; generating a metadata file identifying the contents of the virtual appliance data structure, defining a structure within which individual items of the contents of the virtual appliance data structure are stored, and a portion of the configuration data including at least data identifying an operating system of the first computing device on which the software system was installed and user configuration data defining user accounts and software system access privileges thereof; adding the metadata file to the virtual appliance data structure; and storing the virtual appliance data structure on a data storage device, the virtual appliance data structure forming a virtual appliance.

According to one embodiment, the first computing device is a virtual machine.

According to one embodiment, the software system further includes a database management system and data stored therein.

According to one embodiment, the configuration data included in the metadata file further includes data identifying at least one minimum computing device requirement for a second computing device on which the virtual appliance can be instantiated.

According to one embodiment, the data storage device is a portable data storage device.

According to one embodiment, copying the software system into the virtual appliance data structure includes copying all data from the first computing device except for an operating system of the first computing device and data present on the computing device only for purposes of executing, configuring, and maintaining the operating system.

According to one embodiment, the method further comprises: receiving a command to attach the virtual appliance to a second computing device, wherein performing the attach includes: reading data from the metadata from the virtual appliance and verifying the second computing device is compatible with the virtual appliance; when the second computing device is compatible, connecting to a storage subsystem of a virtual computing landscape of the second computing device, creating a structure on the storage subsystem within which to store items of the virtual appliance, the structure created according to virtual machine metadata defining the structure within which individual items of the contents of the virtual appliance are to be stored, and copying individual items of the virtual appliance to respective data storage locations within the created structure; creating users accounts and setting user access privileges as defined in the virtual appliance metadata; and starting the virtual appliance on the second computing device, the virtual appliance being an identical copy of the software system on the first computing device at the time the virtual appliance was created through performance of the detach.

According to one embodiment, the method further comprises registering the software system installed on the first computing device with a virtual landscape management application; wherein the detach command and the attach command are received and performed at least in part by the virtual landscape management application; and following the start of the virtual appliance on the second computing device, registering the software system as instantiated on the second computing device with the virtual landscape management application to allow management by the virtual landscape management application.

In some embodiments, a non-transitory computer-readable medium, with instructions stored thereon, which when executed by at least one processor cause at least one computer to: receive a command to detach a software system from a first computing device on which the software system is installed and has been configured and modified; and detach the software system from the first computing device by: copying the software system, including executable files, configuration data, software system content, and other data into a virtual appliance data structure; generating a metadata file identifying the contents of the virtual appliance data structure, defining a structure within which individual items of the contents of the virtual appliance data structure are stored, and a portion of the configuration data including at least data identifying an operating system of the first computing device on which the software system was installed and user configuration data defining user accounts and software system access privileges thereof; adding the metadata file to the virtual appliance data structure; and storing the virtual appliance data structure on a data storage device, the virtual appliance data structure forming a virtual appliance.

In some embodiments, a system comprises at least one processor, at least one memory device, and at least one network interface; a virtual appliance repository module stored in the at least one memory device and executable at least in part by the at least one processor to receive, store, and provide virtual appliances.
a virtual appliance management module stored in the at least one memory device and executable by the at least one processor to: receive, via the at least one network interface device, a command to detach a software system from a first computing device on which the software system is installed and has been configured and modified; and detach the software system from the first computing device by:
copying the software system, including executable files, configuration data, software system content, and other data into a virtual appliance data structure; generating a metadata file identifying the contents of the virtual appliance data structure, defining a structure within which individual items of the contents of the virtual appliance data structure are stored, and a portion of the configuration data including at least data identifying an operating system of the first computing device on which the software system was installed and user configuration data defining user accounts and software system access privileges thereof; adding the metadata file to the virtual appliance data structure; and storing the virtual appliance data structure in the virtual appliance repository, the virtual appliance data structure forming a virtual appliance.

According to one embodiment, copying the software system into the virtual appliance data structure includes copying all data from the first computing device except for an operating system of the first computing device and data present on the first computing device only for purposes of executing, configuring, and maintaining the operating system.

According to one embodiment, the virtual appliance management module is further executable by the at least one processor to: receive, via the at least one network interface device, a command to attach the virtual appliance to a second computing device, wherein performing the attach includes: reading the metadata of the virtual appliance stored by in the virtual appliance repository and verifying the second computing device is compatible with the virtual appliance; when the second computing device is compatible, connecting, via the at least one network interface device, to a storage subsystem of a virtual computing landscape of the second computing device, creating a structure on the storage subsystem within which to store items of the virtual appliance, the structure created according to virtual machine metadata defining the structure within which individual items of the contents of the virtual appliance are to be stored, and copying individual items of the virtual appliance to respective data storage locations within the created structure; creating users accounts and setting user access privileges as defined in the virtual appliance metadata; and starting the virtual appliance on the second computing device, the virtual appliance being an identical copy of the software system on the first computing device at the time the virtual appliance was created through performance of the detach.

In some embodiments, a method comprises receiving, in a virtual landscape management application executable by at least one processor, data identifying a virtual appliance stored in a virtual appliance repository and data identifying a virtual machine to which the virtual appliance is to be deployed; connecting to a storage subsystem of a virtual computing landscape of the identified virtual machine, creating a structure on the storage subsystem within which to store the virtual appliance, the structure created according to virtual appliance metadata of the identified virtual machine, and copying the virtual appliance from the virtual appliance repository to the created structure; executing an attach utility to instantiate the virtual appliance on the virtual machine according to the virtual appliance metadata and starting the virtual appliance once instantiated; and registering the instantiated virtual appliance with the virtual landscape management application to allow management of the virtual appliance via the virtual landscape management application.

According to one embodiment, the method of further comprises mounting the structure created in the storage subsystem to the virtual machine.

According to one embodiment, the virtual appliance repository, virtual machines with the virtual computing landscape, the storage subsystem, and instantiated virtual appliances are each manageable, at least in part, via the virtual landscape management application.

According to one embodiment, executing the attach utility includes:
installing the virtual appliance on the virtual machine, creating users and setting user access control as defined in the virtual appliance metadata, and setting virtual hostnames.

According to one embodiment, receiving the data identifying the virtual appliance stored in the virtual appliance repository and the data identifying the virtual machine to which the virtual appliance is to be deployed includes: providing first data via a network for presentation within a user interface, the first data representative of virtual appliances available within the virtual appliance repository; receiving the data identifying the identified virtual appliance; based on virtual appliance metadata of the identified virtual appliance, determining virtual machines to which the identified virtual appliance can be deployed; providing second data via the network for presentation in the user interface, the second data representative of determined virtual machine to which the identified virtual appliance can be deployed; and receiving the data identifying the virtual machine to which the identified virtual appliance is to be deployed.

According to one embodiment, determining virtual machines to which the identified virtual appliance can be deployed includes: reading the virtual appliance metadata to obtain virtual machine computing requirements thereof; identifying, in data representative of virtual machines under management of the virtual landscape management application, zero to many virtual machines to which the virtual appliance can be deployed.

According to one embodiment, the determining virtual machines to which the identified virtual appliance can be deployed, based on virtual appliance metadata of the identified virtual appliance, is further based on a requirement that the virtual machine have no other software deployed to it other than an operating system.

In some embodiments, a non-transitory computer-readable medium, with instructions stored thereon, which when executed by at least one processor cause at least one computer to: receive, in a virtual landscape management application, data identifying a virtual appliance stored in a virtual appliance repository and data identifying a virtual machine to which the virtual appliance is to be deployed; connect to a storage subsystem of a virtual computing landscape of the identified virtual machine, create a structure on the storage subsystem within which to store the identified virtual appliance, the structure created according to virtual appliance metadata of the identified virtual appliance, and copy the virtual appliance from the virtual appliance repository to the structure; execute an attach utility to instantiate the virtual appliance on the virtual machine according to the virtual appliance metadata and start the virtual appliance once instantiated; and register the instantiated virtual appliance with the virtual landscape management application to allow management of the virtual appliance via the virtual landscape management application.

In some embodiments a system comprises at least one processor, at least one memory device, and at least one network interface; a virtual appliance repository module stored in the at least one memory device and executable at least in part by the at least one processor to receive, store, and provide virtual appliances; and a virtual appliance management module stored in the at least one memory device and executable by the at least one processor to: receive, via the at least one network interface device, data identifying a virtual appliance stored by the virtual appliance repository module and data identifying a virtual machine to which the virtual appliance is to be deployed; connect, via the at least one network interface device, to a storage subsystem of a virtual computing landscape of the identified virtual machine, create a structure on the storage subsystem within which to store the identified virtual appliance, the structure created according to virtual appliance metadata, and copy the virtual appliance from the virtual appliance repository module to the structure; execute an attach utility to instantiate the virtual appliance on the virtual machine according to the virtual appliance metadata and start the virtual appliance once instantiated; and register the instantiated virtual appliance with a virtual landscape management application to allow management of the virtual appliance via the virtual landscape management application.

### BRIEF DESCRIPTION OF THE DRAWINGS

The accompanying drawings illustrate the various embodiments and, together with the description, further serve to explain the principles of the embodiments and to enable one skilled in the pertinent art to make and use the embodiments.
FIG. 1 is a logical block diagram of virtual computing landscape, according to an example embodiment.
FIG. 2 is a block diagram of a virtualization management application, according to an example embodiment.
FIG. 3 is a block diagram of a virtual appliance data structure, according to an example embodiment.
FIG. 4 is a virtual appliance metadata file, according to an example embodiment.
FIG. 5 is a block flow diagram of a method, according to an example embodiment.
FIG. 6 is a block flow diagram of a method, according to an example embodiment.
FIG. 7 is a block flow diagram of a method, according to an example embodiment.
FIG. 8 is a block diagram of a computing device, according to an example embodiment.
FIG. 9 is a flowchart of a method providing a first application for at least one first computer system.

### DETAILED DESCRIPTION

Systems desiring to add, or add to, a complex software system, such as an Enterprise Resource Planning (ERP), Customer Relationship Management (CRM), or Human Capital/Resource Management (HCM/HRM) software system, typically install an instance of the software system and then have the system configured and customized to processing or running requirements. However, as discussed above, such implementation tasks can be time, and risk (e.g. of failures) intensive, which is further compounded by needed technical maintenance effort. To reduce time, and risk, appliances e.g. virtual appliances are utilized.

A virtual appliance is generally a template of an application that may exist for an entire computing application (e.g., an ERP, CRM, HRM applications), add-ons or enhancements to an application (e.g., data process intelligence module, mobile module, language or other application localization module or content, data warehouse management), content (e.g., key performance indicators, workflow processes), data (e.g., contact lists), and the like. Virtual appliance templates are generally pre-assembled, pre-configured, and pre-tested for their respective purposes. As such, virtual appliances are appliance-like in that they can essentially be "plugged-in" and they function for their intended purpose. Virtual appliances typically include binaries, configuration data, content files, and data files that can be instantiated on a virtual machine, or other computing device, that includes a minimal amount of preinstalled software. For example, the minimal amount of preinstalled software may include only an operating system or a virtual machine, also referred to generally herein as an operating system. In some embodiments, a virtual appliance may include not only binaries, configuration data, content files, and data files of the application or software system of the virtual appliance, but also ancillary software systems that the software system of the virtual appliance relies upon during execution, such as a database management system.

Virtual appliances can be transported rapidly, such as over a network or on a detachable storage device (i.e., external USB hard disk, memory stick, optical disc, etc.). Virtual appliances, once transported to their destination are then rapidly deployable and are immediately functional. However, while virtual appliances can be pre-customized and preconfigured for very specific industries and industry segments, virtual appliances are still typically generic implementations of the software systems included therein in many regards and are in need of additional configuration and customization to meet the needs of the particular system. The additional configuration and customization to date has been performed onsite or by integrators having connectivity to the instantiated system and requires the system be instantiated for the system to allow for configuring and customizing.

Various embodiments herein include at least one of systems, methods, and software for building and transporting centrally configured and modified software systems. Such embodiments provide for a virtual appliance to be configured and customized prior to transport of the virtual appliance to the target system. Once configured and customized, the software system of the virtual appliance is reassembled into a virtual appliance, transported, and rapidly deployed in a form as needed by the system. This results in significant execution time, and risk (e.g. of failures) mitigation.

Some additional embodiments include a virtualization management functions that may be included in a standalone virtualization management application or included in whole or in part in one or more other portions of software, such as utilities and administrative tools of an operating system or virtual machine. Such virtualization management functions may include functions to allow starting and stopping of software systems, relocation of a software system between computing environments (i.e., from one virtual machine to another), software system copying, software system cloning, and the like. The virtualization management functions may also include maintaining a virtual appliance repository into which virtual appliances may be imported, stored, cataloged in a searchable manner, copied to a virtual or physical computing landscape, and attached to a virtual machine or physical computing device. Such embodiments provide administrators great flexibility in managing software systems deployed within one or more computing environments, whether the computing environments are physical computing landscapes where software system are deployed to one or more physical computing devices or virtual computing landscapes where software systems are deployed to one or more virtual machines.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

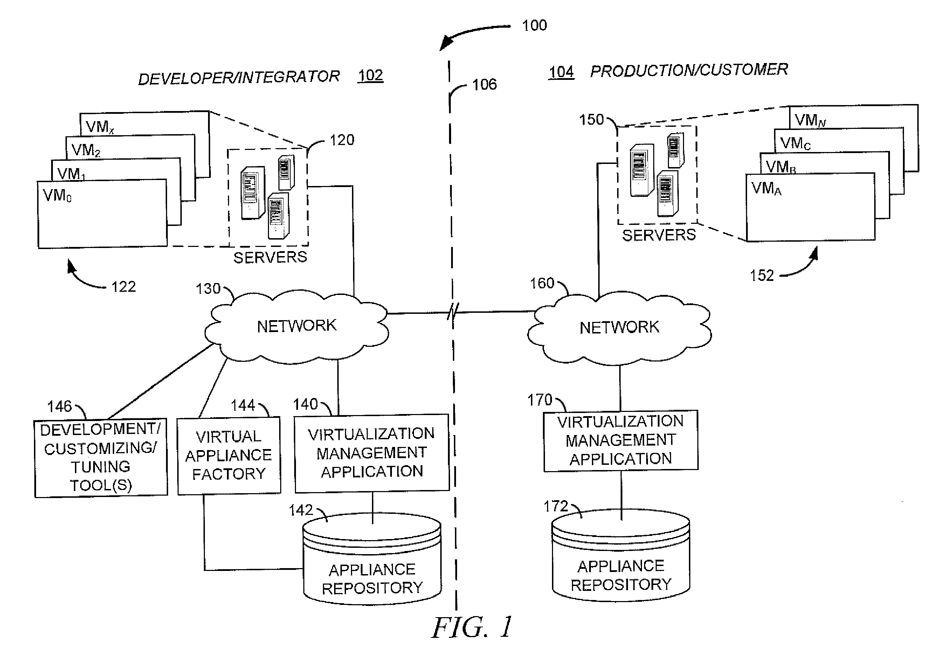

FIG. 1 is a logical block diagram of virtual computing landscape 100, according to an example embodiment. Virtual computing landscapes may take different forms, and as such, the virtual computing landscape 100 is provided merely as one example.

The virtual computing landscape 100 includes a developer/integrator portion 102 and a production/user portion 104. The developer/integrator portion 102 is a computing environment within which a software development organization or a system integrator utilizes to develop, configure, customize, and test, software systems and virtual appliances. The production portion 104 is a computing environment of or contracted by a user that requests a software system from the developer or integrator of the developer/integrator portion 102.

The developer/integrator portion 102 includes a network 130 to which various computing devices and software systems are connected. The network 130 may include one or more of a local area network, wide area network, system area network, the Internet, and other network types. The various computing devices connected to the network 130 typically include one or more servers 120.

The servers 120 may have software systems deployed directly to the hardware or operating system of a respective server. However, in some embodiments, one or more of the servers 120 may provide a virtual computing environment within which one or more virtual machines 122 may exist and on, or within, which software systems may be deployed. In some embodiments, there may be a plurality of servers 120 providing a variety of different types of virtual machine computing environments on which software systems may be deployed. This allows the developer/integrator portion 102 to be utilized to tailor software systems for deployment to various different types of virtual machine computing environments of particular target systems or hosted computing environments of different hosted computing environment (sometimes referred to as cloud-computing) providers.

In some embodiments, each of the one or more servers 120 or one or more virtual machines thereon provide a cloud-computing environment. Each cloud-computing environment is a network resource accessible via the network 130. The cloud-computing environments generally provide one or both of computing and storage capacity via the network 130 as services. A cloud-computing environment typically includes a virtualized environment that is logically distinct from other computing environments that may execute on the same hardware, but are each individually accessible. Thus, one cloud-computing environment may include a hardware set, such as one or more server 120 computers having one or more virtual machines that each provide a computing environment within which computer applications, such as software systems, may execute. In some embodiments, an application server or other process within which data and service requests may be received via the network 130 and serviced execute within a virtual machine, as discussed previously. A cloud-computing environment may also include a database or other data storage application or arrangement logically located therein.

Also connected to the network may be one or more development, customizing, and tuning tools 146. Such tools 146 are utilized by system administrators, developers, integrators, and the like to modify, add to, augment, or otherwise make changes or additions to software systems deployed on the one or more servers 120 or virtual machines thereon. The tools 146 are typically utilized to perform such actions with regard to software systems, content, configuration settings, and the like deployed or otherwise stored to one or more virtual machines resident on one or more of the servers 120 or deployed directly on the hardware of one or more of the servers 120. Although illustrated distinctly from the one or more servers 120, the tools 146 may be deployed on one or more of the one or more servers 120 or on a different computing device present within the developer/integrator portion 102 or in another computing environment.

In operation, a software system may be deployed to one or more of the servers 120 or virtual machines present thereon. The deployment may be from a standard installation media, such as an optical disc, of the software system to be deployed. This may also include deployment of a database management system and other ancillary systems or programs that the deployed software system may rely upon or otherwise interact with when deployed. In other embodiments, a virtual appliance may be instantiated on the one or more servers 120 or one or more virtual machines present thereon.

Once a software system is deployed, the development, customizing, and tuning tools 146, when present in the particular embodiment, may then be utilized to tailor the software system for a particular target system. A target system is an entity that has used or will receive and use the deployed software system. The tools 146 are utilized to tailor the software system to meet processing requirements and needs of the target system. The software system may then be tested to ensure it is properly functional, evaluated by the target system for compliance, and the subject of other quality and acceptance processes, depending on the particular embodiment.

Once the software system is deemed acceptable, a virtual appliance factory 144 may execute to generate a new virtual appliance from the software system. The virtual appliance factory 144 may be triggered to execute based on input and commands received via a virtualization management application 140. The virtualization management application 140 and the virtual appliance factory 144, in typical embodiments, are deployed and execute on a computing device, such as one or more of the servers 120. In other embodiments, one or both of the virtualization management application 140 and the virtual appliance factory 144 are deployed outside of the developer/integrator portion 102 and connect via a network, such as an Internet connection to the network 130.

In some embodiments, the virtual appliance factory 144, upon receipt of a command to generate a virtual appliance with regard to a particular deployed software system, will first stop execution of the software system and any ancillary software systems thereof, such as a database management system. In some such embodiments, rather than stopping execution, the virtual appliance factory 144 may instead simply block access thereto to prevent data access and modifications to the software system and its configuration. Regardless, after the software system is stopped or locked, the virtual appliance factory 144 may analyze the software system to identify a structure thereof. This typically includes identifying the constituent portions of the software system, such as files, data, configuration settings, and a folder and data storage structure where the constituent portions are stored. A virtual appliance data structure may then be generated and an equivalent folder and data storage structure generated therein. The identified constituent portions of the software system are then copied to the virtual appliance data structure and the structure generated therein. Metadata is then typically generated to include data descriptive of the software system included in the virtual appliance, minimum resource requirements for a computing device or virtual machine to which the virtual machine may be attached, user accounts to be established, and configuration settings. The metadata may include a lesser or greater amount of data depending on the particular embodiment. The metadata is added to the virtual appliance data structure and the virtual appliance data structure is stored, such as to a virtual appliance repository. The software system may then be restarted or unlocked.

The virtualization management application 140 may be utilized for various purposes with regard to virtual and non-virtual computing environments, management thereof, and deployment thereto. In particular, the virtualization management application 140 may provide an administrator view of software systems deployed to the one or more servers 120 and virtual machines thereon, which may include various views including data representative of a customization status of a software system. Thus, when a software system is deemed acceptable, the acceptable status may be reflected within a view of the virtualization management application 140. The virtualization management application 140 may then provide one or more user interface tools to perform various functions, such as to generate a virtual appliance from the acceptable software system by calling one or more services that may be provided by the virtual appliance factory.

Additionally, the virtualization management application 140, in some embodiments, includes a suite of tools, some of which may include user interfaces, for managing virtual computing landscapes. A virtual computing landscape is generally a virtual computing environment within which there are computing devices on which virtual machines may be instantiated and computing resources, such as processors, storage, and the like that may be allocated to virtual machines. Tools of the virtualization management application 140 may include tools to start and stop software systems, instantiate and dis-instantiate virtual machines, allocate, reallocate, and dis-allocate resources thereto, to relocate or copy software systems between computing environments, clone software systems, and the like. The virtualization management application may also include tools for maintaining a virtual appliance repository 142 into which virtual appliances may be imported, stored, cataloged in a searchable manner, copied to a virtual or physical computing landscape, attached to and detached from a virtual machine or physical computing device, and replicated from one or more virtual machines or physical computing devices to one or more other virtual machines or physical computing devices. Such embodiments provide administrators great flexibility in managing software systems deployed within one or more computing environments, whether the computing environments are physical computing landscapes where software system are deployed to one or more physical computing devices, virtual computing landscapes where software systems are deployed to one or more virtual machines, or a combination of both.

Some embodiments include a user interface tool to generate a virtual appliance from a deployed software system. The user interface in such embodiments may request various inputs. For example, the user interface tool may request information regarding a mode of transport for the virtual appliance to be generated, various elements of the software system to include in the virtual appliance (i.e., whether or not to include the database management system or just certain data stored therein), and other information depending on the particular embodiment.

The mode of transport, in some such embodiments, may include a selection of or specification of a network location to which the virtual appliance is to be transmitted. The mode of transport may also include an ability to specify a storage device, and a type thereof, to which the virtual appliance is to be stored. For example, the storage device may be a network drive, a drive of a local computing device, a Universal Serial Bus (USB) device such as a hard disk or a memory stick or card, or an optical disc.

Once such information is received within this user interface tool of the virtualization management application 140, the virtual appliance factory 144 may be triggered. The virtual appliance factory 144 then proceeds to generate and store a virtual appliance data structure. The virtual appliance data structure will typically include various forms of data. For example, the virtual appliance data structure in some embodiments includes binaries and executable files of the software system along with configuration data, content, and other data as present in the one or more computing environments, virtual or otherwise, to which the software system is deployed. The virtual appliance data structure in such embodiments may also include metadata identifying the contents of the virtual appliance data structure, virtual machine or operating system variables identifying properties of a computing platform from which the software system was copied. The metadata may further include database management system compatibility information, data identifying a database management system and other ancillary systems and programs included in the virtual appliance data structure, and data defining a data storage structure to be generated and into which various elements of the virtual appliance data structure are to be deployed. Other data may be included in the metadata to assist in deployment, cataloging, tracking, and other such purposes of the virtual appliance of the virtual appliance data structure. The virtual appliance factory 144 stores the virtual appliance data structure to an appliance repository 142 and may further store the virtual appliance data structure to other locations. For example, when the virtualization management application 140 receives input via the user interface tool, discussed above, specifying a mode of transport, the virtual appliance data structure may be stored to a particular location (i.e., a particular folder or to a particular USB device).

Similarly, when a software system deployed within a computing landscape, such as a virtual computing landscape, is to be replicated or moved to another machine, the virtualization management application 140 may utilize the same or a different user interface tool that is tailored to the specific purpose or includes options that tailor the specific task of relocating or copying the software system. Such options request input with regard to a machine, either virtual or physical, to which the software system is to be copied or relocated. Some such embodiments include one or more options for choosing a virtual machine hosted by a third party. Such options may include an option to select a previously procured third-party hosted virtual machine.

In some embodiments, the options further include an ability to procure a third-party hosted virtual machine. The user interface and the virtualization management application 140 may be adapted to communicate with one or more third-party virtual machine hosts via a defined interface, web services, or other data interfaces accessible via a network.

The appliance repository 142 may simply be a data storage device accessible via the network 130 that stores virtual appliance data structures. In other embodiments, the appliance repository 142 may be a data storage repository, such as a hard disk, and includes, or otherwise utilizes, a database management system providing an indexed and searchable data set of stored virtual appliance data structures. The database in such embodiments may be populated with data copied from the metadata of each stored virtual appliance data structure. In such embodiments, the virtualization management application 140 may provide abilities to search and select preexisting virtual appliances stored in the appliance repository 142 for deployment, modification, transport, and other purposes.

Referring now to the production/user portion 104, as briefly mentioned above, the production/user portion 104 is a computing environment of or contracted by a user that requests a software system from the developer or integrator of the developer/integrator portion 102. For example, the production/user portion 104 may be a computing environment maintained by the user, also referred to above as the target entity. In other embodiments, the production/user portion 104 may be a cloud-computing environment procured from a cloud-computing host by the user. For example, a cloud-computing environment procured from a cloud-computing host by the user may be a third-party hosted virtual machine.

The production/user portion 104 includes one or more servers 150. The one or more servers 150 may include one or both of standalone servers and virtual machines 152 deployed thereon. The one or more servers are connected to a network 160. The network 160 may include one or more of a local area network, wide area network, system area network, the Internet, and other network types. In some embodiments, the network 160 may be directly or indirectly connected to the network 130 of the developer/integrator portion 102, such as to allow for transport of virtual appliance data structures.

Also connected to the network 160 is a virtualization management application 170 and an appliance repository 172. In some embodiments, the virtualization management application may be identical to the virtualization management application 140 of the developer/integrator portion 102 discussed above. However, in other embodiments, the virtualization management application 170 may be a "light" version thereof, including less than all management functions and tools described previous. However, in other embodiments, the virtualization management application 170 may include additional management functions and tools. In further embodiments, the virtualization management application 170 provides software tools for specific tasks. For example, such tasks include querying and viewing data representative of virtual appliance data structures stored in the appliance repository 172, selection of a virtual appliance data structure for deployment, and presentation and selection of one or more servers or virtual machines 152 to which a virtual appliance of the selected virtual appliance data structure is to be deployed. The virtualization management application 170 may further include one or more processes to deploy a selected virtual appliance to a selected location, to collect and store data with regard to virtual appliance deployments that have been made, and to collect and store data with regard to statuses of software systems deployed as virtual appliances.

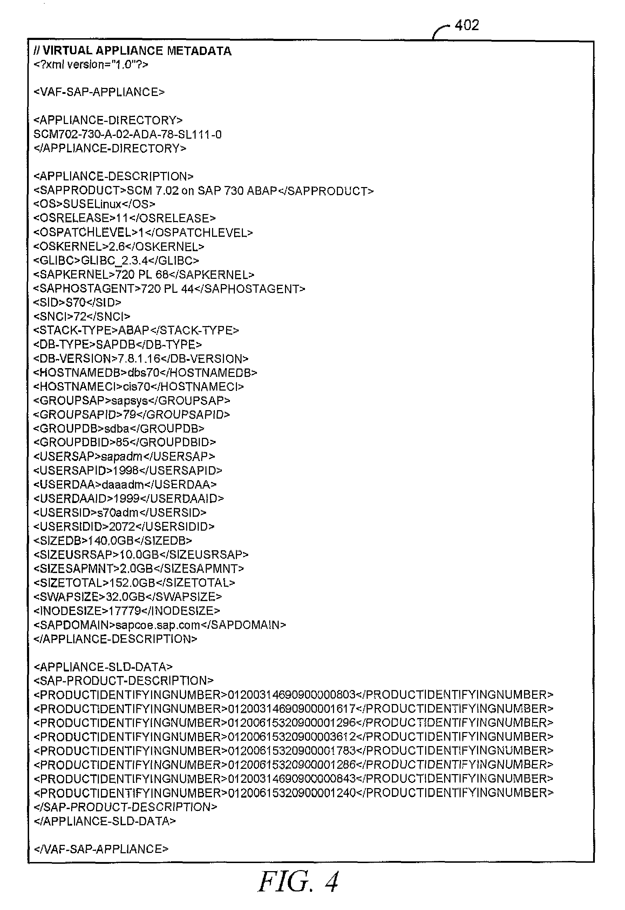

Regardless of the functions provided by the virtualization management application 170, and similarly for the virtualization management application 140, the various views of virtual appliances stored in the respective appliance repositories 142, 172 and as deployed within the virtual computing landscape 100, or elsewhere, is facilitated by a standardized data form of metadata included in virtual appliance data structures. Further, various tools included within the virtuaiization management applications 140, 170 perform their respective functions based at least in part on this metadata, such as in determining resource requirements of virtual appliances when deployed, data storage structures that are to be created and populated with virtual appliance components and other data, views of available virtual appliances, user accounts to be created during an attachment process, and the like. An example of such metadata is illustrated and described with regard to FIG. 4.

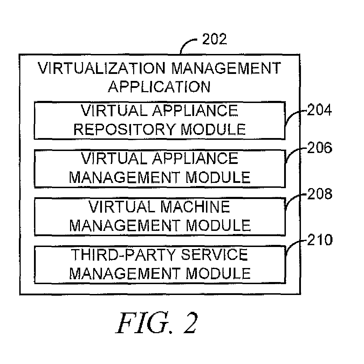

FIG. 2 is a block diagram of a virtualization management application 202, according to an example embodiment. The virtualization management application 202 is an example of the virtualization management applications 140, 170 illustrated and described with regard to FIG. 1. The virtualization management application 202 typically includes at least a virtual appliance repository module 204, a virtual appliance management module 206, and a virtual machine management module 208. In some embodiments, the virtualization management application 202 may further include a third-party service management module 210.

The virtual appliance repository module 204 is operable to receive, store, and provide virtual appliances, such as in the form of a virtual appliance data structure as discussed above. The virtual appliance repository module 204 manages virtual appliances stored in a virtual appliance repository, such as a hard disk, database, or other data storage mechanism, service, or device. A logical or user interface may operate to receive data representative of a virtual appliance data structure to be imported, receive the corresponding data, and process that data. The processing of virtual appliance data may include importing metadata descriptive of the contents and compatibilities of the virtual appliance. The importing of the metadata typically includes storing a representation of at least some of the data in an index or database table in a manner to be easily queried when a search of available virtual appliances may be performed.

The virtual appliance management module 206 is at least capable of presenting a view of virtual appliances available for deployment from an appliance repository, as managed by the virtual appliance management module 204, receive a selection of a virtual appliance for deployment, and to affect that deployment. However, in some embodiments, the virtual appliance management module 206 may be further capable of building virtual appliances from a deployed software system. Such embodiments generally also include a virtual appliance factory, such as virtual appliance factory 144 illustrated and described above with regard to FIG. 1.

In embodiments of the virtual appliance management module 206 capable of building a virtual appliances, the virtual appliance management module 206 may receive a command to detach a software system from a first computing device, such as a virtual machine, on which the software system is installed and has been configured and modified. The command may be received via a user interface of a thick client application or via a network in an embodiment where the virtual appliance management module 206 is a server based and executable module. The virtual appliance management module may then detach the software system from the first computing device by copying the software system, including executable files, configuration data, software system content, and other data into a virtual appliance data structure. Elements to be copied may be dictated by a virtual appliance management module 206, by a known virtue that the software system is the only software deployed within its computing environment, through identification of the software system and retrieval of data via a network service where the data identifies what is to be copied for the particular software system, and other programmatic, configuration, and retrievable mechanisms and algorithms. In some embodiments, copying the software system into the virtual appliance data structure includes copying all data from the first computing device except for an operating system of the first computing device and data present on the computing device only for purposes of executing, configuring, and maintaining the operating system.

The virtual appliance management module 206 may then generate a metadata file identifying the contents of the virtual appliance data structure and data defining a structure (i.e., folders, network locations, and other data storage locations) within which individual items of the contents of the virtual appliance data structure are stored and are to be generated when redeployed. The virtual appliance management module 206 may generate further metadata in the metadata file including at least a portion of the software system configuration data, such as data identifying an operating system of the first computing device on which the software system was installed and user configuration data defining user accounts and software system access privileges thereof. This additional metadata may further include data identifying minimum requirements for a computing environment within which the virtual appliance may be deployed, such as a minimum processing power, needed storage space, memory, and other system requirements. The virtual appliance management module 206, in such embodiments, may then store the virtual appliance data structure in the appliance repository, such as by triggering an import function of the virtual appliance repository module 204.

The virtual appliance management module 206, when deploying a virtual appliance, receives a command to attach the virtual appliance to a computing device, such as a virtual machine including only a virtual machine operating system or a bare metal computing device including only an operating system. In some embodiments, the virtual appliance management module 206 may receive a command including data identifying the computing device to which the virtual appliance is to be attached (i.e., deployed) and an identifier of the virtual appliance to attach. The virtual appliance management module 206 may then read data from the metadata of the identified virtual appliance and verifiy the computing device to which the virtual appliance is to be attached is compatible with the virtual appliance. For example, the metadata included in a data structure of the virtual appliance may identify minimums for a computing device on which the virtual appliance be deployed, such as storage space, available or allocated memory, available or allocated processing power, and the like.

When the second computing device is compatible, the virtual appliance management module 206 may connect to a storage subsystem of a virtual computing landscape of the identified computing device, such as a storage array accessible by virtual machines of which the computing device is one. The virtual appliance management module 206 may then create a structure on the storage subsystem within which to store items of the virtual appliance where the structure is created according to virtual appliance metadata defining the structure within which individual items of the contents of the virtual appliance are to be stored. Once the structure is created, the virtual appliance management module 206 copies individual items of the virtual appliance to respective data storage locations within the created structure. The virtual appliance management module 206 may further create user accounts and set user access privileges as defined in the virtual appliance metadata. At this point, the virtual appliance is an identical copy of the software system as it was at the time the virtual appliance was created from an instance on another computing device, such as through performance of a detach operation as previously described. However, some such embodiments of the virtual appliance management module 206 may further include a registration process that is executed to register the instantiated virtual appliance with other modules and processes of the virtualization management application 202. This registration may facilitate management of the instantiated virtual appliance by the other modules and processes of the virtualization management application 202, such as to perform stop, start, copy, relocate, and other such actions with regard to the instantiated virtual appliance.

The virtual machine management module 208 includes tools and process through which a virtual computing landscape may be managed. For example, various logical and user interfaces may be provided to instantiate and dis-instantiate virtual machines and allocate, reallocate, and dis-allocate resources thereto. Such resources may include processor, storage space, memory, and other computing resources. The virtual machine management module 208 may also be utilized to relocate virtual machines from one physical computing device to another physical computing device, to relocate application instances between virtual machines, and to move other data between virtual machines and computing devices. Additional functions and tools may also be included in virtual machine management module 208 in other embodiments.

The third-party service management module 210 includes tools to procure and register cloud-computing resources within the virtualization management application 202 for utilization and management by the other modules 204, 206, 208 of the virtualization management application 202. For example, there are cloud-computing hosts that offer hosted virtual machines and other computing resources that are accessible via a network, such as the Internet, once procured. The third-party service management module 210 provides abilities to procure such resources as needed, sometimes on demand, and provide connectivity information to allow virtual appliances to be deployed thereto. In such embodiments, some or all of a virtual computing landscape may be procured and accessible via information provided or as obtained and registered within the virtualization management application. Thus, when a virtual appliance is identified for deployment within an attach process of the virtual appliance management module 206, a virtual machine request may be generated thereby and provided to the third-party service management module 210. The third-party service management module 210 may then procure a virtual machine to which the identified virtual appliance is to be attached. Once procured, the connectivity information for the procured virtual machine may be provided to the virtual appliance management module 206 which will then proceed with the attach process. In some such embodiments, a request for a virtual machine provided by the virtual appliance management module 206 includes parameters defining resources needed within the virtual machine to be procured by the third-party service management module 210. For example, such parameters may be as specified in or determined from metadata included in a virtual appliance data structure.

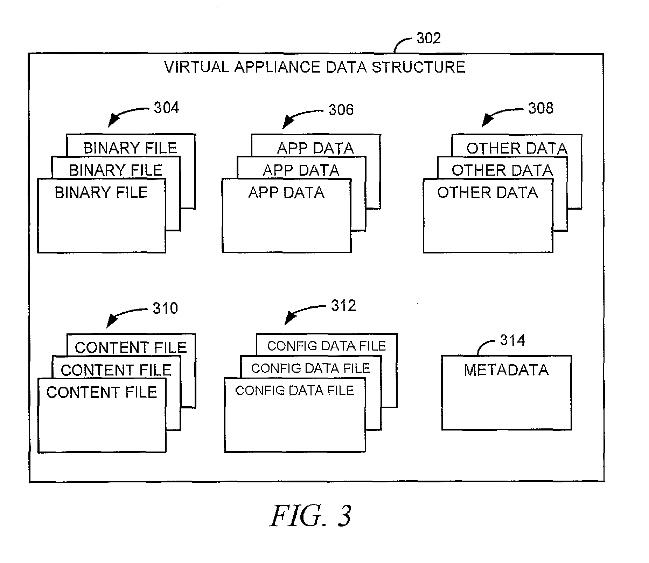

FIG. 3 is a block diagram of a virtual appliance data structure 302, according to an example embodiment. The virtual appliance data structure 302 is a diagram of data elements that may be included in a virtual appliance data structure that defines a virtual appliance. This example is intended only as an illustrative example and not necessarily an example of all virtual appliance data structures.

The example virtual appliance data structure 302 includes binary files 304, application data 306, content files 310, configuration data files 312, metadata 314, and other data 308. The binary files 304 are intended to represent one or more executable files and other code files that may be script-based or compiled. The application data 306 represents data elements that may be consumed by the virtual appliance either during deployment (i.e., attachment) or during execution. The content files 310 represent various items and forms of content that may be consumed by the virtual appliance during execution and may include document templates, images, graphics, audio files, video files, training materials, and other static or dynamic content. The configuration data files 312 represent data files that store configuration data for configuring the virtual appliance during deployment (i.e., attachment) to control execution of virtual appliance. In some embodiments, the configuration data files 312 may also include preconfigured user accounts that will be established during deployment. The other data 308 represents other data that might be particular to a specific virtual appliance or application instance from which a virtual appliance is generated. The metadata 314 represents metadata as previously described herein. An explicit example of the metadata 314 according to one example embodiment is illustrated and described with regard to FIG. 4. The various elements of the virtual appliance data structure may include elements of not only a software system, but also of other components, utilities, programs, systems, and the like, including a database management system and data to be stored therein, in various embodiments.

FIG. 4 is a virtual appliance metadata file 402, according to an example embodiment. The virtual appliance metadata file 402 is an example of a metadata file that may be included in a virtual appliance data structure. The virtual appliance metadata file 402 generally includes data descriptive of the virtual appliance data structure, a virtual appliance encapsulated therein, a computing environment with which the virtual appliance is compatible (i.e., LINUX operating system release 11, patch level 1, etc.). The virtual appliance metadata file 402 may further include data defining user accounts to be generated when the virtual appliance of the virtual appliance metadata file 402 is deployed (i.e., attached). Additionally, various computing environment variables may be included in the virtual appliance metadata file 402, such as an amount of storage space needed to hold a database (<SIZEDB>) and other such parameters. Additionally of note, the illustrated virtual appliance metadata file 402 is not necessarily intended to be an entirety of such a metadata file. Thus, the length of the virtual appliance metadata file 402 is also not intended to be limiting.

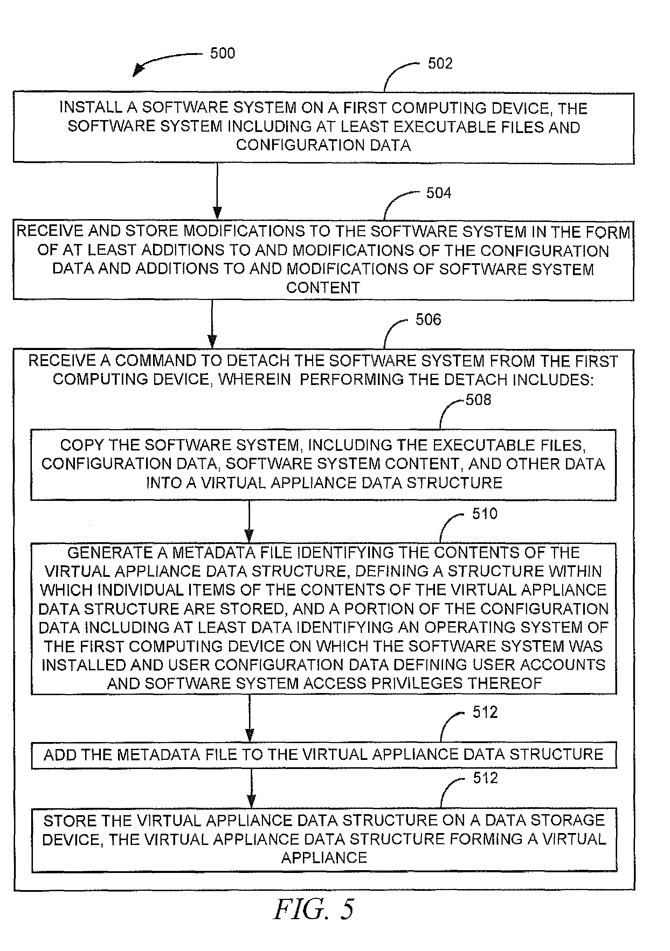

FIG. 5 is a block flow diagram of a method 500, according to an example embodiment. The method 500 is an example of a method of modifying an installed software system in a first computing environment, which is then modified and subsequently detached and stored in the form of a virtual appliance for transport to another computing environment for attachment (i.e., deployment). Such embodiments allow a software system to be tailored by administrators, software developers, and integrators in one location for deployment at another location. Such embodiments allow for software consultancy services to be provided in a flexible manner to allow for delivery of software systems and consultancy service simultaneously. Previously, consultancy services could generally be provided only onsite after a standard installation of the software system is established from standard, non-tailored installation media.

The example method 500 includes installing 502 a software system on a first computing device, such as a virtual machine in a virtual computing landscape. The software system typically includes at least executable files and configuration data. However, as described elsewhere herein, the software system may also include a database management system, content, application data, configuration data, and other data. The method 500 further includes receiving and storing 504 modifications to the software system in the form of at least additions to and modifications of the configuration data and additions to and modifications of software system content.

The method 500 further includes receiving 506 a command to detach the software system from the first computing device.

In some embodiments, performing the detach of the software system from the first computing device according to the received 506 command includes copying 508 the software system, including the executable files, configuration data, software system content, and other data into a virtual appliance data structure. In some embodiments, copying 508 the software system into the virtual appliance data structure includes copying all data from the first computing device except for an operating system of the first computing device and data present on the computing device only for purposes of executing, configuring, and maintaining the operating system.

Performing the detach further includes generating 510 a metadata file identifying the contents of the virtual appliance data structure, defining a structure within which individual items of the contents of the virtual appliance data structure are stored, and a portion of the configuration data including at least data identifying an operating system of the first computing device on which the software system was installed and user configuration data defining user accounts and software system access privileges thereof. The metadata file is then added 512 to the virtual appliance data structure, which is then stored 514 a data storage device. The stored 514 virtual appliance data structure forms a virtual appliance.

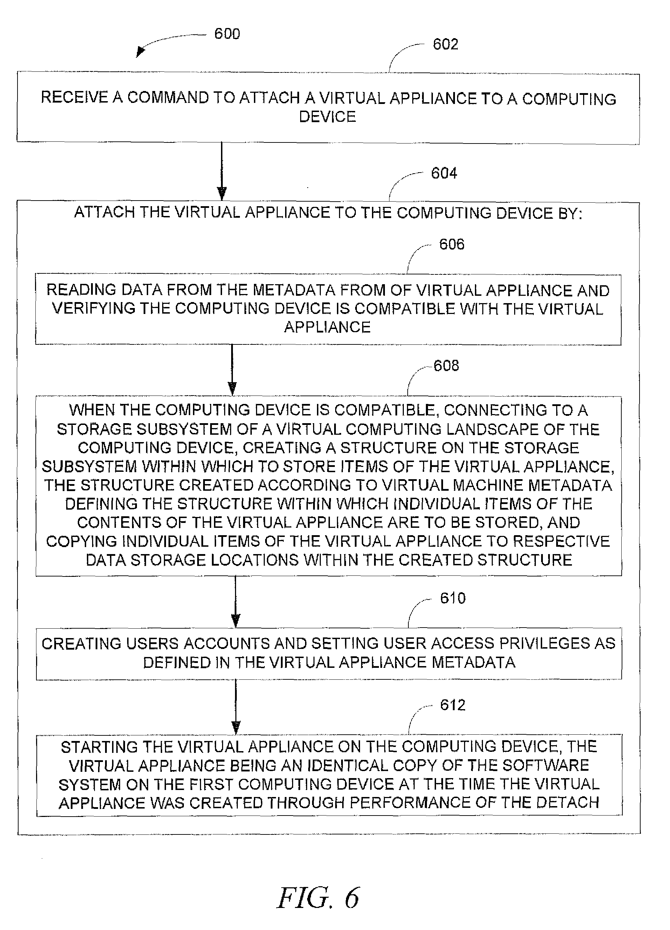

FIG. 6 is a block flow diagram of a method 600, according to an example embodiment. The method 600 is an example method for attaching a virtual appliance, such as may be generated according to the method 500 of FIG. 5, to a computing device. Although not illustrated, the method 600 may include transporting a virtual appliance data structure to a virtual computing landscape. For example, the transporting may include connecting a USB data storage device storing a virtual appliance data structure to a computing device of the virtual computing landscape, transmitting the virtual appliance data structure via a network to a computing device of the virtual computing landscape, among other possibilities.

Once the virtual appliance data structure is transported to the virtual computing landscape, the method may include receiving 602 a command to attach a virtual appliance of the virtual appliance data structure to a computing device, such as a virtual machine. The method may then attach 604 the virtual appliance to the computing device.

Attaching 604 the virtual appliance to the computing device, in some embodiments, includes reading 606 data from the metadata of the virtual appliance data structure and verifying the computing device is compatible with the virtual appliance. When the computing device is compatible, the method 600 includes connecting 608 to a storage subsystem of a virtual computing landscape of the computing device and creating a structure on the storage subsystem within which to store items of the virtual appliance. The structure is created in such embodiments according to virtual machine metadata defining the structure within which individual items of the contents of the virtual appliance are to be stored. Once the structure is created, individual items of the virtual appliance may then be copied to respective data storage locations within the created structure. The method 600 may then create 610 users accounts and set user access privileges as defined in the virtual appliance metadata, if included therein. The virtual appliance may then be starting 612 on the computing device. Once started, or before being started, the software system may be registered with one or more other processes or programs of the computing device or the virtual computing landscape to facilitate management thereof.

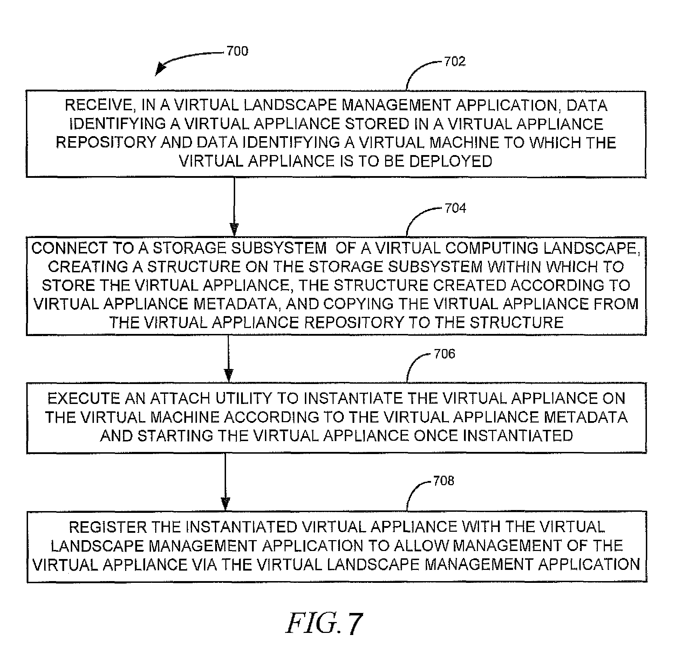

FIG. 7 is a block flow diagram of a method 700, according to an example embodiment. The method 700 is an example of a method that may be performed by a module or process of a virtualization management application, such as virtualization management application 140 of FIG. 1 or virtualization management application 202 of FIG. 2 when deploying a virtual appliance.

The example method 700, in some embodiments, includes receiving 702, in a virtual landscape management application, data identifying a virtual appliance stored in a virtual appliance repository and data identifying a virtual machine to which the virtual appliance is to be deployed. The virtual machine may be in the same virtual computing landscape as the virtual landscape management application or another virtual computing landscape, such as a third party hosted virtual computing landscape. The method 500 may then connect 704 to a storage subsystem of the identified virtual computing landscape and create a structure on the storage subsystem within which to store the virtual appliance. The structure created is typically created according to virtual machine metadata included in a data structure of the identified virtual appliance. The method 700 may then copy the identified virtual appliance from the virtual appliance repository to the created structure.

In some embodiments, the method 700 further includes executing 706 an attach utility to instantiate the virtual appliance on the virtual machine according to the virtual machine metadata. Once instantiated, the method 700 may then start the virtual appliance to cause the virtual appliance to execute. Additionally, the method 700 may include registering 708 the instantiated virtual appliance with the virtual landscape management application to allow management of the virtual appliance via the virtual landscape management application.

As virtual machines may have computing resources allocated and de-allocated, the storage subsystem to which the method 700 connects 704, creates the structure in, and copies the virtual appliance may not be mounted to the virtual machine on which the virtual appliance will execute. Thus, in such embodiments, the storage subsystem may first be generally accessible during execution of the method 700 and following the copying and prior to or during the attach utility execution 706, the method 700 may perform a mount action to mount, or allocation, the structure created in the storage subsystem to the virtual machine.

In some further embodiments of the method 700, executing 706 the attach utility includes installing the virtual appliance on the virtual machine. Executing 706 the attach utility may further include one or more of creating users, setting user access control as defined in the virtual appliance metadata, and setting virtual hostnames.

In these and other embodiments of the method 700, the method 700 may be performed within a server process with which a user, such as an administrator interacts. The server process may provide user interfaces directly or indirectly through either a web server or data that is consumed by other user interfaces, such as may be provided by thick or thin client applications, a mobile device app, or other client application that is client or server based. In some such embodiments, receiving 702 the data identifying the virtual appliance stored in the virtual appliance repository and the data identifying the virtual machine to which the virtual appliance is to be deployed includes the server process providing first data via a network for presentation within a user interface. The first data in such embodiments is representative of virtual appliances available within the virtual appliance repository. Subsequently, data identifying the identified virtual appliance is received.

Based on the data identifying the virtual appliance and metadata of the virtual appliance, virtual machines to which the identified virtual appliance can be deployed can be determined. This determination may be based on minimum computing requirements of the identified virtual machine, as defined in the metadata, in view of available virtual machines and resources thereof. This determination may result in identification of zero to many virtual machines to which the virtual appliance may be deployed. In some embodiments, the metadata may define further rules for virtual machines on which the virtual appliance may be deployed, such as a requirement that the virtual machine have no other software deployed to it other than an operating system. The server process may then provide second data via the network for presentation in the user interface. The second data in such embodiments may be representative of determined virtual machine to which the identified virtual appliance can be deployed. Subsequently, the server process may receive the data identifying the virtual machine to which the identified virtual appliance is to be deployed.

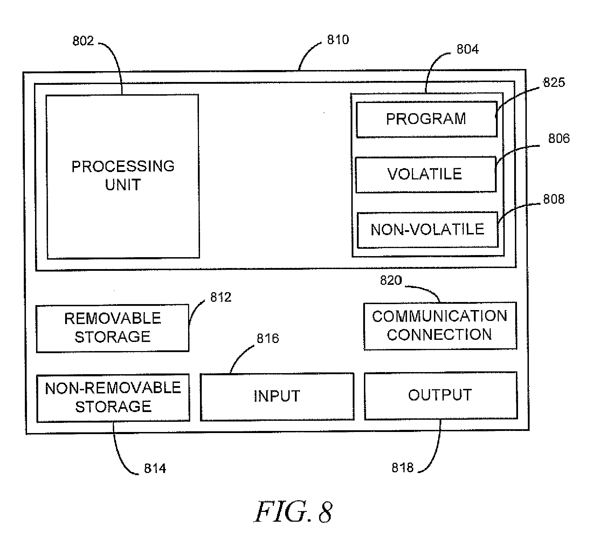

FIG. 8 is a block diagram of a computing device, according to an example embodiment. In one embodiment, multiple such computer systems are utilized in a distributed network to implement multiple components in a transaction-based environment. An object-oriented, service-oriented, or other architecture may be used to implement such functions and communicate between the multiple systems and components. One example-camputing device in the form of a computer 810, may include a processing unit 802, memory 804, removable storage 812, and non-removable storage 814. Although the example-computing device is illustrated and described as computer 810, the computing device may be in different forms in different embodiments. For example, the computing device may instead be a smartphone, a tablet, or other computing device including the same or similar elements as illustrated and described with regard to FIG. 8. Further, although the various data storage elements are illustrated as part of the computer 810, the storage may also or alternatively include cloud-based storage accessible via a network, such as the Internet.

Returning to the computer 810, memory 804 may include volatile memory 606 and non-volatile memory 808. Computer 810 may include - or have access to a computing environment that includes a variety of computer-readable media, such as volatile memory 806 and non-volatile memory 608, removable storage 812 and non-removable storage 814. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 810 may include or have access to a computing environment that includes input 816, output 818, and a communication connection 820. The input 816 may include one or more of a touchscreen, touchpad, mouse, keyboard, camera, and other input devices. The computer may operate in a networked environment using a communication connection 820 to connect to one or more remote computers, such as database servers, web servers, and other computing device. An example remote computer may include a personal computer (PC), server, router, network PC, a peer device or other common network node, or the like. The communication connection 820 may be a network interface device such as one or both of an Ethernet card and a wireless card or circuit that may be connected to a network. The network may include one or more of a Local Area Network (LAN), a Wide Area Network (WAN), the Internet, and other networks.

Computer-readable instructions stored on a computer-readable medium are executable by the processing unit 802 of the computer 810. A hard drive (magnetic disk or solid state), CD-ROM, and RAM are some examples of articles including a non-transitory computer-readable medium. For example, various computer programs or apps, such as one or more applications and modules implementing one or more of the methods illustrated and described herein or an app or application that executes on a mobile device or is accessible via a web browser, may be stored on a non-transitory computer-readable medium.

It will be readily understood to those skilled in the art that various other changes in the details, material, and arrangements of the parts and method stages which have been described and illustrated in order to explain the nature of the inventive subject matter may be made without departing from the principles and scope of the inventive subject matter as expressed in the subjoined claims.

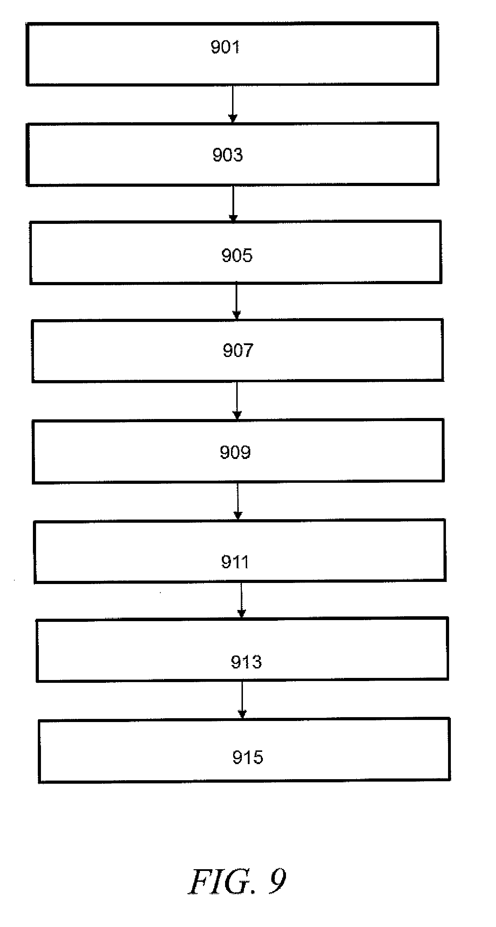

FIG. 9 is a flowchart of a method for providing a first application (e.g. software system of FIG. 2) for at least one first computer system (e.g. 150). For example, the first application may be installed or implemented at the first computer system in order to be executed or run on the first computer system. The first computer system may, for example, comprise an SAP NetWeaver system.

The first application may comprise or may provide a set of data processing workflows. For example, the first application may be configured to provide or to enable all or part of the set of data processing workflows in parallel.

For example, the set of data processing workflows may be add-on of the first application.

A data processing workflow represents specific operations to achieve a defined outcome. For example, a data processing workflow may be a logical grouping of an end-to-end data or work process, and data objects from different computing systems.

For simplicity of the description, an example for a data processing workflow of the set of data processing workflows may be given as follows:
1. A user submits a request for accessing a given data set using a user interface at the first computer system.
2. The first computer system sends a request to a security server to check whether the user belongs to an access list of authorized users.
3. In case the first computer system receives a confirmation from the security server that the user is an authorized user, a database containing the requested data is automatically notified, by the first computer system, for providing the data.
4. The first computer system creates a specific storage area at the first computer system for the user for storing the received data.

For example, the installation or implementation of the first application on the first computer system may comprise two stages. The installation of the first application itself at the first computer system in the first stage and the configuration of part or all of the set of data processing workflows in order to enable them at the first computer system in the second stage. In other terms, the installation of the first application in the first stage may enable the usage of the first application for performing one or more of the set of data processing workflows. However, additional configurations may be required for each one of the set of the data processing workflows in order to be run or be enabled. This may be time consuming in particular when the first application is to be installed on multiple computer systems. This may also require extra se resources in particular for the second stage of the installation. Also, the configuration by a single system may be less error prone than the configuration that may be performed by multiple systems.

In step 901, a pattern of a data processing workflow of the set of data processing workflows may be determined. The pattern indicates one or more workflow processes of the data processing workflow. Following the above example, each step of steps 1-4 may be a workflow process. In another example,

The data processing workflow may be selected from the set of data processing workflows automatically e.g. randomly. In another example, an automatic selection of the data processing workflow from the set of data processing workflows may be received (e.g. by a computing system performing the steps of the present method).

The pattern may for example comprise a collaboration diagram that consists of a collection of pools or nodes each representing a respective workflow process and/or systems related required for running or implementing the workflow process of the data processing workflow. The pattern may be determined using for example a BPMN2 collaboration diagram.

Following the above example, a node of the pattern may indicate the workflow process of step 2 and may further indicate both the first computer system and the security server as being required for performing the step 2. The relation between the first computer system and the security server may be symbolized by a connection between the two in the pattern.

In step 903, a system configuration of the first computer system required for running the first application on the first computer system may be determined. For example, the system configuration may comprise at least one of software, hardware and data configuration.

For example, a hardware configuration of the system configuration may comprise a number of components and/or settings of that number of components of the first computer system, some of which have optional settings which are preset when the first computer system is provided to conform with a particular user's requirement and to run the first application. The hardware configuration may further comprise a firmware configuration. The firmware configuration may comprise a number of components such as memory units of the read only type preloaded with software to run various routines operations on the hardware configuration, in dependence on the hardware configuration of the first configuration.

For example, a software configuration of the system configuration may include an operating system for the hardware configuration of the system configuration and/or a number of application programs including the first application. The data configuration may for example indicate the data to be accessed or used by the first application when running on the first computer system.

The system configuration may be determined or estimated by evaluating the first application. For example, from the first application's code it may be determined which operating system may be used and which components of the operating system may be required for running the first application. Also, the first application (e.g. an XML file associated with the first application's code) may indicate the hardware settings required for running the first application.

In another example, the system configuration may be determined using simulation data based on a model of the first computer system.

In a further example, the system configuration may be determined by running the first application on the first computer system itself. This may be advantageous in case there are multiple first computer systems that may be used to implement the appliance as produced by the present method.

For example, the system configuration may comprise a configuration of the first computer system at a predefined execution stage of the data processing workflow. The system configuration in this case may, for example, be determined using the simulation data.

The execution stage may comprise one of initialization of the data processing workflow and finalization of the data processing workflow.

For example, when the first application is executed at the first computer system e.g. for providing the data processing workflow the configuration required to run the first application may change over execution time, as a workflow process of the data processing workflow may require additional options that have not been used by other workflow processes e.g. such as additional operating system features or network bandwidth resources etc. Thus determining the system configuration at the end of e.g. or at the stage of finalization or ending of the data processing workflow may have the advantage of providing an accurate definition of the system configuration.

In step 905, a second computer system (e.g. such as at least part of system 120 100 or of computing device described in FIG. 8) may be provided in accordance with the system configuration.

In another example, the second computer system may be provided according to a given predefined configuration that may or may not comprise at least part of the second computer system (in this case, see below, a created appliance may be installed only if the system configuration matches the given predefined configuration).

For example, the second computer system may have a minimal configuration (e.g. the system configuration) that is required to run the first application.

For example, the first computer system may not include extra configurations as in the second computer system that may be needed for running other applications or providing extra unnecessary options at the first computer system.

In another example, the first computer system may include a light weight operating system. For that, components of an operating system required for running the first application on the first computer system may be determined, and a light weight version of the operating system using may be generated using the determined components. The light weight version of the operating system may be installed on the second computer system.

Having the second computer system with a minimal configuration may speed-up the process of creating appliances as described below.

In another example, the second computer system may have the same properties as the first computer system, and may allocate the same resources to execute the first application. The second computer system may also mimic the load of the first computer system. This may ensure that the same conditions as in the first computer system are realized which may increase the efficiency of the appliance production in that the produced appliances may run on the first computer system with reduced errors since they are produced on a similar computer system as the first computer system.

In another example, the second computer system may comprise a virtual machine. This may be advantageous, as it may provide a simple method for providing the second computer system using virtual resources. The virtual machine may comprise an operating system and the first application that may run on the operating system of the virtual machine.

In step 907, a structure on a storage subsystem of the second computer system may be created. Within the storage subsystem the first application may be stored.

In step 909, for each workflow process of the one or more workflow processes configuring the first application to enable the workflow process. A workflow process of the one or more workflow processes may include automated or non-automated steps or sub-processes. A workflow process the one or more workflow processes may comprise a number of logical activities executed by machine resources.

For example, systems involved in a workflow process of the one or more workflow processes may be determined. Next, for example, if there is a connection required between the determined components, this connection may be pre-setup as part of configuring the first application.

In another example, after a given workflow process is completed its output results may be sent to a predefined user system. In this case, configuring the first application may comprise including for an identification address of the user system and predefining a communication mean to be used for sending the output results to the user system using the identification address.

Following the above example, the first application may be configured for example for step 1 to display a user interface having interface elements such as a button that indicate to the user of step 1 how to request the data.

For step 2, the first application may be configured by for example storing an identification address of the security server at the first computer system and to configure the first application to send the request to the security server as soon as the first computer system receives a selection e.g. of the button of the user interface that is indicative of the request.

For step 3, the first application may be configured by for example storing an identification address of the database for communication with the database, and to prepare database query requests that may be automatically used to request the data from the database.

For step 4, the first application may be configured for example to display on the user interface using a predefined display format data indicative of the requested data.

In step 911, the configured first application may be instantiated (or the configured first application may be (directly e.g. without instantiation) started on the second computer system) on the second computer system and the first application may be started once instantiated. This may ensure that the configured first application is running on the second computer system.

For example, after checking that the configured first application is running on the second computer system performing step 913. In another example, step 913 may be performed without testing the configured first application if running on the second computer system.

In step 913, the first application may be unlinked from an operating system of the second computer system. The unlinking may comprise a detach operation such as the detach of the software system described above.

The unlinking of the first application may comprise removing file paths (indications or references to the file paths) referring to the operating system (or referring to files of the operating system) of the second computer system.

The same operating system may have different file path name conventions. For example, the second computer system and the first computer system although using the same operating system may have a different file path naming.

The unlinking may also have the advantage that the configured and unlinked application may be installed on the first computer system although the first computer system and the second computer system have different operating systems.

In step 915, the configured and unlinked first application may be packaged to generate a first appliance. The first appliance may comprise a virtual appliance (such as the virtual appliance described above e.g. with reference to FIG.1-7). This may provide a prepackaged software application that provides data processing workflows, making it easier to deploy the software application with minimal configuration.

The packaging may comprise for example constructing a data structure (e.g. a container) that includes at least the configured and unlinked first application. The configured and unlinked first application is the first application after being configured and unlinked in steps 909 and 913 respectively.

The packaging may comprise a collection of parts of the configured and unlinked first application together for distribution or for installation.

For example, a virtual appliance is a virtual machine image designed to run on a specific virtualization platform. The software appliance may be packaged in an applicable image format that supports installations to physical machines and multiple types of virtual machines.

In step 917, the first appliance may be configured to be automatically deployed on the first computer system for providing the selected data processing workflow of the set of data processing workflows.

For example, the configuration of the first appliance may include the file path names that are used by the operating system of the first computer system which may be different from the file path names used by the operating system of the second computer system.

In another example, the configuration of the first appliance may comprise generating a metadata file (such as metadata file 402 of FIG. 4) identifying the contents of the first appliance, defining a structure within which individual items of the contents of the first appliance are stored, and data identifying the operating system on or with which the first appliance (first application) may run and user configuration data defining user accounts and first application access privileges thereof.

The metadata file may be used o r read by a computer system of the at least one first computer system in order to install the first appliance on the computer system.

## Claims

1. A computer implemented method for providing a first application for at least one first computer system (150), wherein the first application comprises a set of data processing workflows, the method comprising:
a) determining (901) a pattern of a data processing workflow of the set of data processing workflows, wherein the pattern indicates one or more workflow processes of the data processing workflow;
b) determining (903) a system configuration of the first computer system required for running the first application on the first computer system;
c) providing (905) a second computer system (120) in accordance with the system configuration;
d) creating (907) a structure on a storage subsystem of the second computer system (120) within which to store the first application and copying the first application to the created structure;
e) for each workflow process of the one or more workflow processes configuring (909) the first application to enable the workflow process;
f) instantiating (911) the configured first application on the second computer system (120) and starting the first application once instantiated;
g) unlinking (913) the first application from an operating system of the second computer system (120);
h) packaging (915) the configured and unlinked first application to generate a first appliance;
i) configuring (917) the first appliance to be automatically deployed on the first computer system (150).

2. The method of claim 1, further comprising before step e):
- instantiating the first application on the second computer system and starting the first application once instantiated;
- unlinking the first application from the operating system;
- packaging the non-configured and unlinked first application to generate a second appliance;
- providing the first and second appliances.

3. The method of claim 1 or 2, wherein the system configuration comprises a configuration of the first computer system at a predefined execution stage of the data processing workflow.

4. The method of claim 3, wherein the execution stage comprises one of:
- initialization of the data processing workflow;
- finalization of the data processing workflow.

5. The method of any of the preceding claims, wherein the at least one first computer system comprises multiple computer systems having the same or different operating systems, wherein in case the multiple computer systems have different operating systems repeating steps b) to i) for each operating system of the different operating systems.

6. The method of any of the preceding claims, wherein configuring the first appliance to be automatically deployed on the first computer system comprises providing data identifying at least one minimum computing device requirement for a third computer system such that the first appliance can be instantiated on the third computer system.

7. The method of any of the preceding claims, wherein providing the second computer system comprises:
- determining components of an operating system required for running the first application on the first computer system;
- generating a light weight version of the operating system using the determined components;
- installing the light weight version of the operating system on the second computer system.

8. The method of any of the preceding claims, wherein the first computer system has a first computer performance, wherein providing the second computer system in accordance with the system configuration comprises providing the second computer system with a second computer performance different from the first computer performance.

9. The method of any of the previous claims, further comprising generating a metadata file (402) identifying the contents of the first appliance, defining a structure within which individual items of the contents of the first appliance are stored, and data identifying the operating system of the second computer system and user configuration data defining user accounts and first application access privileges thereof.

10. The method of claim 9 further comprising:
- receiving a command to attach the first appliance to a third computer system, wherein performing the attach includes:
o reading data from the metadata file and verifying the third computer system is compatible with the first appliance;
∘ when the third computer system is compatible, connecting to a storage subsystem of the third computer system, creating a structure on the storage subsystem within which to store items of the first appliance, the structure created according to the metadata file defining the structure within which individual items of the contents of the first appliance are to be stored, and copying individual items of the first appliance to respective data storage locations within the created structure;
o creating users accounts and setting user access privileges as defined in the metadata file; and
o starting the first appliance on the third computer system, the appliance being an identical copy of the first application on the second computer system at the time the appliance was created through performance of the unlinking.

11. The method of claim 10, wherein the data processing workflow comprises the steps of creating users accounts and setting user access privileges.

12. The method of any of the preceding claims, wherein unlinking comprises removing file paths referring to the operating system of the second computer system.

13. The method of any of the preceding claims, wherein the second computer device comprise a virtual machine.

14. A computer program product comprising computer executable instructions to perform the method steps of the method of any one of the preceding claims.

15. A computer system for providing a first application for at least one first computer system, wherein the first application comprises a set of data processing workflows, the computer system being configured for:
a) determining a pattern of a data processing workflow of the set of data processing workflows, wherein the pattern indicates one or more workflow processes of the data processing workflow;
b) determining a system configuration of the first computer system required for running the first application on the first computer system;
c) providing a second computer system in accordance with the system configuration;
d) creating a structure on a storage subsystem of the second computer system within which to store the first application and copying the first application to the created structure;
e) for each workflow process of the one or more workflow processes configuring the first application to enable the workflow process;
f) instantiating the configured first application on the second computer system and starting the first application once instantiated;
g) unlinking the first application from an operating system of the second computer system;
h) packaging the configured and unlinked first application to generate a first appliance;
i) configuring the first appliance to be automatically deployed on the first computer system.
